# EUROPEAN PATENT APPLICATION

(11) **EP 4 451 429 A1**
(43) Date of publication of application: **23.10.2024**
(21) Application number: 24163587.9
(22) Date of filing: 14.03.2024
(51) Int. Cl.: H01M 10/653, H01M 50/103

(54) **BATTERY CELL**

(30) Priority: 12.04.2023 JP 2023064672
(71) Applicant: Prime Planet Energy & Solutions, Inc., Chuo-ku Tokyo 103-0022 (JP)
(72) Inventor: HARAZUKA, Kazuhiro, Tokyo, 103-0022 (JP); KINUGASA, Masazumi, Tokyo, 103-0022 (JP)
(74) Representative: Kuhnen & Wacker Patent- und Rechtsanwaltsbüro PartG mbB

(57) **Abstract**

A battery cell includes: a case body (21) having a second side surface (29); and an insulating sheet (51) that covers the case body (21). The insulating sheet (51) has: a trapezoidal portion (52) having a trapezoidal shape including a lower side and a pair of first oblique sides (53), the lower side being defined by a first side (31) of the second side surface (29), the trapezoidal portion (52) being adhered to the second side surface (29); and a pair of triangular portions (71) folded from the trapezoidal portion (52) along the pair of first oblique sides (53). Each of the triangular portions (71) includes a corresponding one of the first oblique sides (53), a second oblique side (72), and a third oblique side (73). The insulating sheet (51) further has a pair of second side portions (41) overlapping with the second side surface (29) with the pair of second side portions (41) being folded from the triangular portions (71) along the pair of second oblique sides (72).

## Description

### CROSS REFERENCE TO RELATED APPLICATIONS

This nonprovisional application is based on Japanese Patent Application No. 2023-064672 filed on April 12, 2023 with the Japan Patent Office, the entire contents of which are hereby incorporated by reference.

### BACKGROUND OF THE INVENTION

### Field of the Invention

The present invention relates to a battery cell.

### Description of the Background Art

For example, Japanese Patent Laying-Open No. 2013-33668 discloses a battery cell including: an exterior container having a prismatic shape; and an insulating film that covers the exterior container.

### SUMMARY OF THE INVENTION

As disclosed in Japanese Patent Laying-Open No. 2013-33668 described above, there has been known a battery cell including: a case body forming an external appearance in the form of a rectangular parallelepiped; and an insulating sheet that covers the case body by folding the insulating sheet. In such a battery cell, there is such a concern that when water such as condensation water enters the case body from a folded portion of the insulating sheet, a short-circuit current may be generated or electric leakage may occur.

Thus, it is an object of the present invention to solve the above-described problem and to provide a battery cell so as to more securely prevent entry of water.
A battery cell comprising: a case body having a bottom surface, a pair of first side surfaces, and a second side surface, the pair of first side surfaces each rising from the bottom surface and facing each other, the second side surface rising from the bottom surface and having an area smaller than an area of each of the first side surfaces, the case body forming an external appearance in a form of a rectangular parallelepiped; and an insulating sheet that covers the case body by applying an adhesive agent to one of a front surface and a rear surface of the insulating sheet and folding the insulating sheet, the insulating sheet having a strip shape, wherein the second side surface includes a first side and a pair of second sides, the first side forming a boundary with the bottom surface, the pair of second sides each rising from the first side and respectively forming boundaries with the pair of first side surfaces, the insulating sheet has a bottom portion adhered to the bottom surface, a pair of first side portions respectively adhered to the pair of first side surfaces, a trapezoidal portion having a trapezoidal shape including a lower side and a pair of first oblique sides, the lower side being defined by the first side with the trapezoidal portion being folded along the first side from the bottom portion, the pair of first oblique sides extending in oblique directions with respect to the second sides from intersections of the first side and the second sides respectively, the trapezoidal portion being adhered to the second side surface, and a pair of triangular portions overlapping with the trapezoidal portion with the pair of triangular portions being folded from the trapezoidal portion along the pair of first oblique sides, each of the triangular portions includes a corresponding one of the first oblique sides, a second oblique side, and a third oblique side, the second oblique side extending between the first oblique side and the first side from an intersection of the first side and a corresponding one of the second sides, the third oblique side connecting the first oblique side and the second oblique side, and the insulating sheet further has a pair of second side portions overlapping with the second side surface with the pair of second side portions being folded from the triangular portions along the pair of second oblique sides and the pair of second side portions being folded from the pair of first side portions along the second side.

According to the battery cell thus configured, since the insulating sheet is provided with the trapezoidal portion adhered to the second side surface of the case body, a water entry path from the outside to the second side surface can be set at a high position with respect to the bottom surface of the case body. Further, since the insulating sheet is provided with the triangular portion overlapping with the trapezoidal portion, a water entry path to the second side surface of the case body through the upper side of the trapezoidal portion can be closed using the adhesive surface of the second side portion. With these, water can be more securely prevented from entering the battery cell from the outside.

The battery cell according to [1], wherein the trapezoidal portion further includes an upper side extending parallel to the lower side and connecting the pair of first oblique sides, the pair of second side portions include overlapping portions that overlap with each other on the second side surface, and a length of the upper side is equal to or more than a length of each of the overlapping portions in a direction in which the upper side extends.

According to the battery cell thus configured, interference can be avoided between the second side and the first oblique side corresponding to the folded portion of the trapezoidal portion and the triangular portion.

The battery cell according to [1] or [2], wherein the trapezoidal portion further includes an upper side extending parallel to the lower side and connecting the pair of first oblique sides, and a length between the lower side and the upper side is equal to or more than a length of the lower side.

According to the battery cell thus configured, the water entry path from the outside to the second side surface of the case body can be set at a higher position with respect to the bottom surface of the case body.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a perspective view showing a battery cell according to an embodiment of the present invention.
Fig. 2 is a side view showing the battery cell when viewed in a direction indicated by an arrow II in Fig. 1.
Fig. 3 is a perspective view showing a first step of assembling the battery cell in Fig. 1.
Fig. 4 is a side view showing a second step of assembling the battery cell in Fig. 1.
Fig. 5 is a side view showing a third step of assembling the battery cell in Fig. 1.

### DESCRIPTION OF THE PREFERRED EMBODIMENTS

Embodiments of the present invention will be described with reference to figures. It should be noted that in the figures referred to below, the same or corresponding members are denoted by the same reference characters.

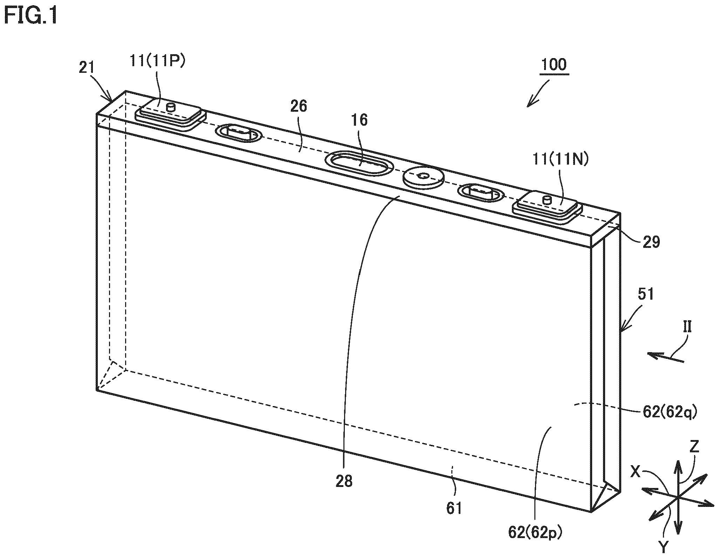

Fig. 1 is a perspective view showing a battery cell according to an embodiment of the present invention. Referring to Fig. 1, battery cell 100 according to the present embodiment is a lithium ion battery. Battery cell 100 has an output density of 8000 W/L or more. Battery cell 100 has a prismatic shape and has a thin plate shape in the form of a rectangular parallelepiped.

In the present specification, for convenience of description of the structure of battery cell 100, a "Y axis" is defined as an axis extending in a thickness direction of battery cell 100, a "Z axis" is defined as an axis orthogonal to the Y axis and extending in an upward/downward direction, and an "X axis" is defined as an axis extending in a direction orthogonal to the Y axis and the Z axis.

Typically, a plurality of battery cells 100 are stacked in the Y axis direction and electrically connected in series with each other, thereby forming a battery module. The battery module is mounted as a power supply for driving a vehicle such as a hybrid electric vehicle (HEV), a plug-in hybrid electric vehicle (PHEV), or a battery electric vehicle (BEV).

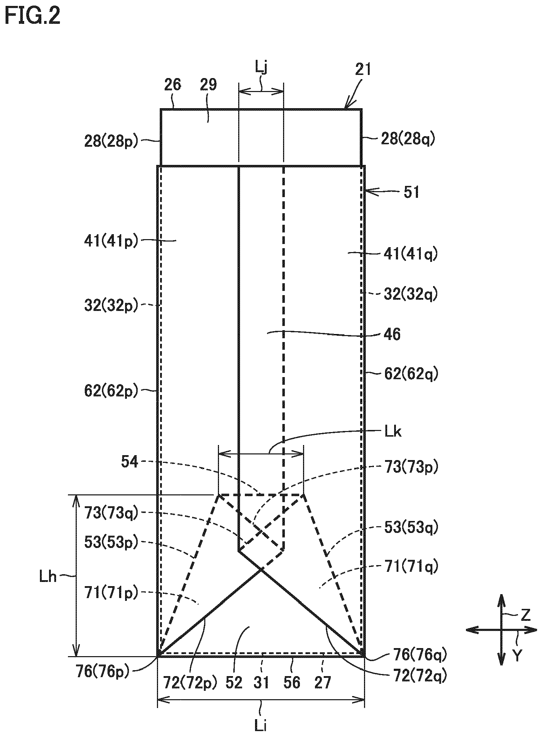

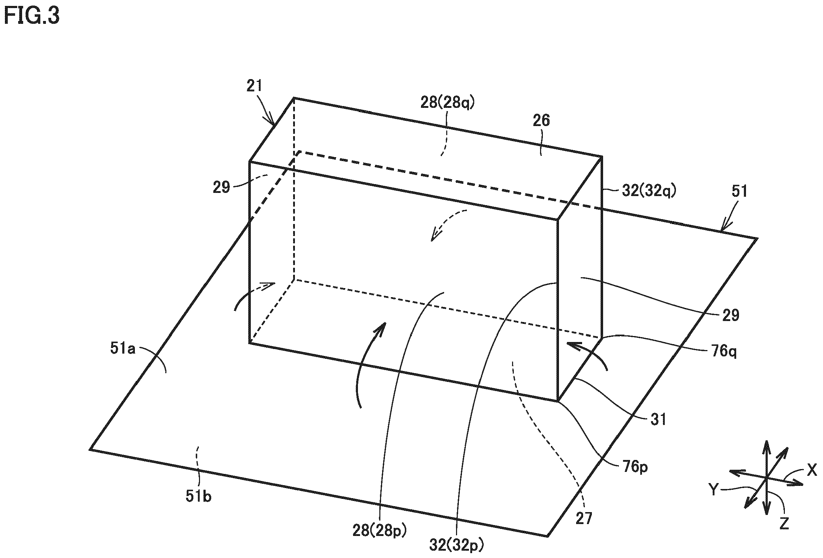

Fig. 2 is a side view showing the battery cell when viewed in a direction indicated by an arrow II in Fig. 1. Fig. 3 is a perspective view showing a first step of assembling the battery cell in Fig. 1.

Referring to Figs. 1 to 3, battery cell 100 has a case body 21. Case body 21 is constituted of a housing having a rectangular parallelepiped shape. Case body 21 is composed of a metal. Case body 21 accommodates an electrode assembly and an electrolyte solution.

As shown in Fig. 3, case body 21 includes a bottom surface 27, a pair of first side surfaces 28 (28p, 28q), a pair of second side surfaces 29 facing each other, and a top surface 26. Bottom surface 27 is disposed at a bottom portion of case body 21. Top surface 26 is disposed at a top portion of case body 21. Each of bottom surface 27 and top surface 26 is constituted of a flat surface orthogonal to the Z axis. When viewed in a plan view, bottom surface 27 has a rectangular shape having long sides each extending in the X axis direction and short sides each extending in the Y axis direction.

The pair of first side surfaces 28 (first side surface 28p and first side surface 28q) face each other in the Y axis direction. Each of first side surfaces 28 is constituted of a flat surface orthogonal to the Y axis. When viewed in a plan view, first side surface 28 has a rectangular shape having long sides each extending in the X axis direction and short sides each extending in the Z axis direction. First side surface 28 has the largest area among the plurality of side surfaces of case body 21. The pair of second side surfaces 29 face each other in the X axis direction. Each of second side surfaces 29 is constituted of a flat surface orthogonal to the X axis. Second side surface 29 has an area smaller than that of first side surface 28. When viewed in a plan view, second side surface 29 has a rectangular shape having short sides each extending in the Y axis direction and long sides each extending in the Z axis direction.

Second side surface 29 has a first side 31 and a pair of second sides 32 (32p, 32q). First side 31 forms a boundary between second side surface 29 and bottom surface 27. First side 31 corresponds to a short side of second side surface 29 extending in the Y axis direction. The pair of second sides 32 rise from first side 31 and respectively form boundaries with the pair of first side surfaces 28. Second sides 32 correspond to the long sides of second side surface 29 extending in the Z axis direction. A lower end portion of each of second sides 32 intersects an end portion of first side 31 in the Y axis direction so as to form a corner portion of second side surface 29. First side 31 and second side 32p intersect at an intersection 76p. First side 31 and second side 32q intersect at an intersection 76q.

As shown in Fig. 1, battery cell 100 further has a gas-discharge valve 16. Gas-discharge valve 16 is provided on top surface 26. Gas-discharge valve 16 is provided at a central portion of top surface 26 in the X axis direction. When an internal pressure of case body 21 becomes equal to or more than a predetermined value due to gas generated in case body 21, gas-discharge valve 16 discharges the gas to outside of case body 21.

Battery cell 100 further has electrode terminals 11 that are a pair of a positive electrode terminal 11P and a negative electrode terminal 11N. Electrode terminals 11 are provided on top surface 26. Positive electrode terminal 11P and negative electrode terminal 11N are provided on both sides beside gas-discharge valve 16 in the X axis direction.

Battery cell 100 further has an insulating sheet 51. Insulating sheet 51 is a sheet having a strip shape and having a long-side direction that is one direction and a width direction that is a direction orthogonal to the one direction. Insulating sheet 51 has a rectangular shape when viewed in a plan view. Insulating sheet 51 is composed of a resin. The material of insulating sheet 51 may be polypropylene (PP), polyethylene terephthalate (PET), polyphenylene sulfide (PPS), polyimide (PI), or polyolefin (PO).

Insulating sheet 51 covers case body 21. Insulating sheet 51 is folded to cover bottom surface 27, the pair of first side surfaces 28, and the pair of second side surfaces 29 of case body 21. One of front surface and rear surface of insulating sheet 51 is an adhesive surface 51a having an adhesive agent applied thereon, and the other of the front surface and rear surface of insulating sheet 51 is a non-adhesive surface 51b having no adhesive agent applied thereon. Insulating sheet 51 is basically provided such that adhesive surface 51a faces case body 21.

Bottom surface 27 is entirely covered with insulating sheet 51. In Fig. 1, the pair of first side surfaces 28 and the pair of second side surfaces 29 are partially exposed from insulating sheet 51; however, the pair of first side surfaces 28 and the pair of second side surfaces 29 may be entirely covered with insulating sheet 51.

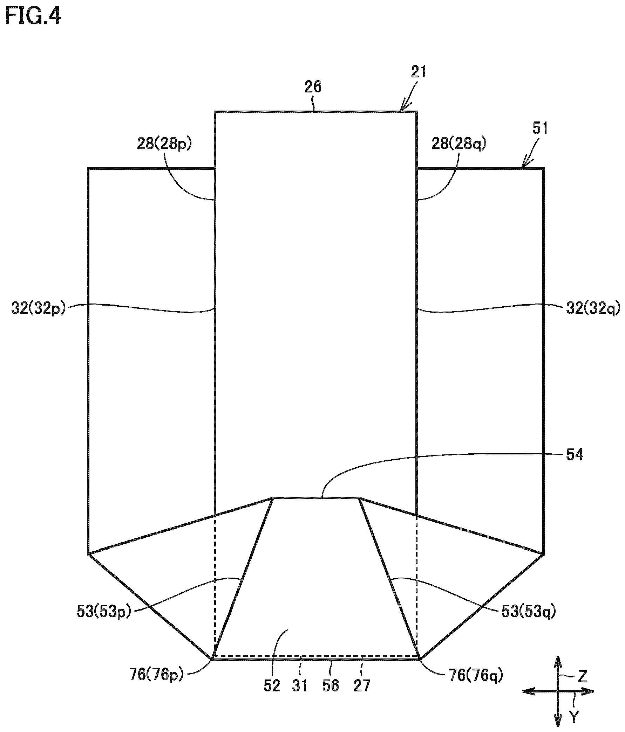

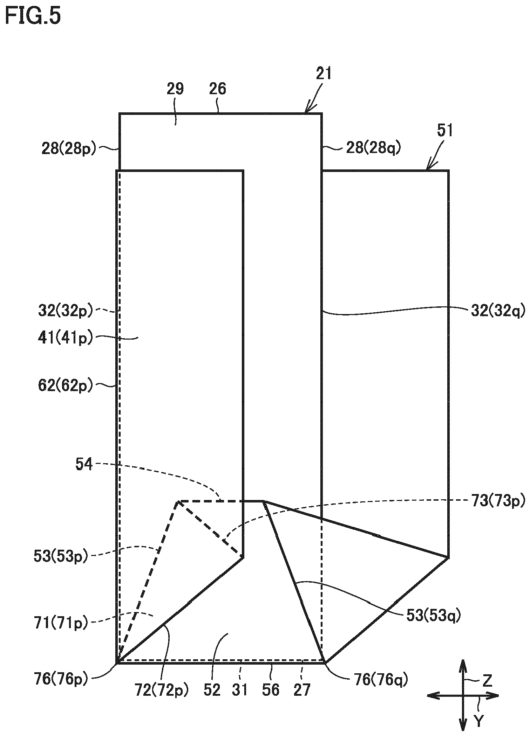

Fig. 4 is a side view showing a second step of assembling the battery cell in Fig. 1. Fig. 5 is a side view showing a third step of assembling the battery cell in Fig. 1.

It should be noted that in order to more apparently illustrate the folded structure of insulating sheet 51, a total length (thickness) of case body 21 in the Y axis direction in Figs. 2 to 5 is illustrated to be larger than the thickness of case body 21 in Fig. 1. In each of Figs. 2, 4, and 5, one of the pair of second side surfaces 29 is shown, but insulating sheet 51 covers both of the pair of second side surfaces 29 in the same manner.

Referring to Figs. 1 to 5, insulating sheet 51 has a bottom portion 61 and a pair of first side portions 62 (62p, 62q). Bottom portion 61 is adhered to bottom surface 27. Bottom portion 61 has a rectangular shape corresponding to bottom surface 27 when viewed in a plan view. The pair of first side portions 62 (first side portion 62p and first side portion 62q) are adhered to the pair of first side surfaces 28 (first side surface 28p and first side surface 28q), respectively. First side portion 62 is folded from bottom portion 61 along the long side of first side portion 62 extending in the X axis direction. First side portion 62 has a rectangular shape corresponding to first side surface 28 when viewed in a plan view.

As shown in Figs. 2, 4, and 5, insulating sheet 51 further has a trapezoidal portion 52. Trapezoidal portion 52 is adhered to second side surface 29. Trapezoidal portion 52 has a trapezoidal shape when viewed in a plan view. Trapezoidal portion 52 is folded from bottom portion 61 along first side 31 of second side surface 29.

Trapezoidal portion 52 has an upper side 54, a lower side 56, and a pair of first oblique sides 53 (53p, 53q). Upper side 54 and lower side 56 extend parallel to each other. Upper side 54 connects first oblique side 53p and first oblique side 53q. The pair of first oblique sides 53 extend between upper side 54 and lower side 56. The pair of first oblique sides 53 are provided in line symmetry with respect to the central line of second side surface 29 extending in the Z axis direction.

Lower side 56 extends in the Y axis direction. Lower side 56 overlaps with first side 31 of second side surface 29. Upper side 54 extends in the Y axis direction at a position away from first side 31 in the Z axis direction. A length of upper side 54 in the Y axis direction is smaller than a length of lower side 56 in the Y axis direction. First oblique sides 53 extend in oblique directions with respect to first side 31 and second sides 32. First oblique side 53p extends from intersection 76p between first side 31 and second side 32p. First oblique side 53q extends from intersection 76q between first side 31 and second side 32q.

An angle between first side 31 and each first oblique side 53 may be 45° or more or may be less than 45°.

Insulating sheet 51 further has a pair of triangular portions 71 (71p, 71q). The pair of triangular portions 71 are disposed on second side surface 29. The pair of triangular portions 71 overlap with trapezoidal portion 52 on second side surface 29. Triangular portion 71p is folded from trapezoidal portion 52 along first oblique side 53p. Triangular portion 71q is folded from trapezoidal portion 52 along first oblique side 53q.

Triangular portion 71p and triangular portion 71q partially overlap with each other on trapezoidal portion 52.

Each of triangular portions 71 (71p, 71q) includes a corresponding one of first oblique sides 53 (53p, 53q), a second oblique side 72 (72p, 72q), and a third oblique side 73 (73p, 73q).

Triangular portion 71 shares first oblique side 53 with trapezoidal portion 52. First oblique side 53 is a folded portion of triangular portion 71 from trapezoidal portion 52. Second oblique side 72p extends from intersection 76p between first side 31 and first oblique side 53p. Second oblique side 72q extends from intersection 76q between first side 31 and first oblique side 53q. Second oblique side 72p and second oblique side 72q intersect each other on the central line of second side surface 29 extending in the Z axis direction.

Third oblique side 73 connects first oblique side 53 and second oblique side 72. Third oblique side 73p extends between upper side 54 and first oblique side 53p from an intersection of upper side 54 and first oblique side 53p. Third oblique side 73q extends between upper side 54 and first oblique side 53q from an intersection of upper side 54 and first oblique side 53q. Third oblique side 73p and third oblique side 73q intersect each other on the central line of second side surface 29 extending in the Z axis direction.

A corner portion of triangular portion 71p including an intersection between second oblique side 72p and third oblique side 73p overlaps with a corner portion of triangular portion 71q including an intersection between second oblique side 72q and third oblique side 73q.

Insulating sheet 51 further has a pair of second side portions 41 (41p, 41q). The pair of second side portions 41 overlaps with second side surface 29. Second side portion 41p is folded from triangular portion 71p along second oblique side 72p, and is folded from first side portion 62p along second side 32p. Second side portion 41q is folded from triangular portion 71q along second oblique side 72q, and is folded from first side portion 62q along second side 32q.

The pair of second side portions 41 have overlapping portions 46. Second side portion 41p and second side portion 41q overlap with each other on second side surface 29 at overlapping portions 46. At overlapping portions 46, second side portion 41p overlaps with second side surface 29, and second side portion 41q overlaps with second side portion 41p. At a position at which triangular portion 71p and triangular portion 71q partially overlap with each other, trapezoidal portion 52, triangular portion 71p, second side portion 41p, triangular portion 71q, and second side portion 41q are stacked on second side surface 29 in this order.

Second side portion 41p is adhered to a portion of second side surface 29, triangular portion 71p, and a portion of trapezoidal portion 52. Second side portion 41q is adhered to a portion of second side surface 29, a portion of second side portion 41p, triangular portion 71q, and a portion of the trapezoidal portion.

A length Lk of upper side 54 is equal to or more than a length Lj of each of overlapping portions 46 in the Y axis direction in which upper side 54 extends (Lk>Lj). With such a configuration, when overlapping portions 46 are provided at the pair of second side portions 41, interference can be avoided between second side portion 41p and first oblique side 53q corresponding to the folded portion of trapezoidal portion 52 and triangular portion 71q.

Next, a step of covering case body 21 with insulating sheet 51 in battery cell 100 in Fig. 1 will be described.

Referring to Fig. 3, first, bottom portion 61 is provided in insulating sheet 51. Specifically, case body 21 is placed on insulating sheet 51 having a strip shape such that adhesive surface 51a of insulating sheet 51 and bottom surface 27 of case body 21 face each other. Insulating sheet 51 is adhered to bottom surface 27. On this occasion, the long-side direction of insulating sheet 51 corresponds to the X axis direction, and the short-side direction (width direction) of insulating sheet 51 corresponds to the Y axis direction. The length of insulating sheet 51 in the X axis direction is larger than the length of case body 21 in the X axis direction, and the length of insulating sheet 51 in the Y axis direction is larger than the length of case body 21 in the Y axis direction.

Next, first side portion 62 is provided in insulating sheet 51. Specifically, insulating sheet 51 is folded by 90° along the long side of first side surface 28 extending in the X axis direction. Insulating sheet 51 is adhered to first side surface 28.

Referring to Figs. 3 and 4, next, trapezoidal portion 52 is provided in insulating sheet 51. Specifically, insulating sheet 51 is folded at 90° along first side 31 of second side surface 29. Insulating sheet 51 is adhered to second side surface 29 in a range corresponding to the trapezoidal shape of trapezoidal portion 52.

Referring to Figs. 4 and 5, next, triangular portion 71p and second side portion 41p are provided in insulating sheet 51. Specifically, insulating sheet 51 is folded toward the forward side along first oblique side 53p of trapezoidal portion 52, and further folded toward the forward side along second oblique side 72p of triangular portion 71p. Insulating sheet 51 is adhered to triangular portion 71p, a portion of trapezoidal portion 52, and a portion of second side surface 29.

Referring to Figs. 5 and 2, next, triangular portion 71q and second side portion 41q are provided in insulating sheet 51. Specifically, insulating sheet 51 is folded toward the forward side along first oblique side 53q of trapezoidal portion 52, and further folded toward the forward side along second oblique side 72q of triangular portion 71q. Insulating sheet 51 is adhered to triangular portion 71q, a portion of trapezoidal portion 52, a portion of second side surface 29, and a portion of second side portion 41p. With the above step, battery cell 100 shown in Fig. 1 is completed.

In the present embodiment, since insulating sheet 51 is provided with trapezoidal portion 52 adhered to second side surface 29 of case body 21, a water entry path from the outside to second side surface 29 can be set at a high position with respect to bottom surface 27 of case body 21. Further, since insulating sheet 51 is provided with triangular portion 71 overlapping with trapezoidal portion 52, a water entry path to second side surface 29 of case body 21 through upper side 54 of trapezoidal portion 52 can be closed using adhesive surface 51a of second side portion 41. Therefore, water can be more securely prevented from entering battery cell 100 from the outside.

A length Lh between lower side 56 and upper side 54 (height of trapezoidal portion 52) may be equal to or more than length Li of lower side 56 (Lh≥Li). According to such a configuration, the water entry path from the outside to second side surface 29 of battery cell 100 can be set at a higher position with respect to bottom surface 27 of case body 21.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery cell comprising:
a case body (21) having a bottom surface (27), a pair of first side surfaces (28), and a second side surface (29), the pair of first side surfaces (28) each rising from the bottom surface (27) and facing each other, the second side surface (29) rising from the bottom surface (27) and having an area smaller than an area of each of the first side surfaces (28), the case body (21) forming an external appearance in a form of a rectangular parallelepiped; and
an insulating sheet (51) that covers the case body (21) by applying an adhesive agent to one of a front surface and a rear surface of the insulating sheet (51) and folding the insulating sheet (51), the insulating sheet (51) having a strip shape, wherein
the second side surface (29) includes a first side (31) and a pair of second sides (32), the first side (31) forming a boundary with the bottom surface (27), the pair of second sides (32) each rising from the first side (31) and respectively forming boundaries with the pair of first side surfaces (28),
the insulating sheet (51) has
a bottom portion (61) adhered to the bottom surface (27),
a pair of first side portions (62) respectively adhered to the pair of first side surfaces (28),
a trapezoidal portion (52) having a trapezoidal shape including a lower side (56) and a pair of first oblique sides (53), the lower side (56) being defined by the first side (31) with the trapezoidal portion (52) being folded along the first side (31) from the bottom portion (61), the pair of first oblique sides (53) extending in oblique directions with respect to the second sides (32) from intersections of the first side (31) and the second sides (32) respectively, the trapezoidal portion (52) being adhered to the second side surface (29), and
a pair of triangular portions (71) overlapping with the trapezoidal portion (52) with the pair of triangular portions (71) being folded from the trapezoidal portion (52) along the pair of first oblique sides (53),
each of the triangular portions (71) includes a corresponding one of the first oblique sides (53), a second oblique side (72), and a third oblique side (73), the second oblique side (72) extending between the first oblique side (53) and the first side (31) from an intersection of the first side (31) and a corresponding one of the second sides (32), the third oblique side (73) connecting the first oblique side (53) and the second oblique side (72), and
the insulating sheet (51) further has a pair of second side portions (41) overlapping with the second side surface (29) with the pair of second side portions (41) being folded from the triangular portions (71) along the pair of second oblique sides (72) and the pair of second side portions (41) being folded from the pair of first side portions (62) along the second side (32).

2. The battery cell according to claim 1, wherein
the trapezoidal portion (52) further includes an upper side (54) extending parallel to the lower side (56) and connecting the pair of first oblique sides (53),
the pair of second side portions (41) include overlapping portions (46) that overlap with each other on the second side surface (29), and
a length of the upper side (54) is equal to or more than a length of each of the overlapping portions (46) in a direction in which the upper side (54) extends.

3. The battery cell according to claim 1 or 2, wherein
the trapezoidal portion (52) further includes an upper side (54) extending parallel to the lower side (56) and connecting the pair of first oblique sides (53), and
a length between the lower side (56) and the upper side (54) is equal to or more than a length of the lower side (56).
